# EUROPEAN PATENT SPECIFICATION

(11) **EP 4 124 630 B1**
(45) Date of publication and mention of the grant of the patent: **22.01.2025**
(21) Application number: 21188291.5
(22) Date of filing: 28.07.2021
(51) Int. Cl.: C08G 59/32, C08G 59/50, C08G 59/62, C08G 59/68, C09D 163/00

(54) **BINDER COMPOSITION COMPRISING TRIMETHYLOLETHANE TRIGLYCIDYL ETHER**
BINDEMITTELZUSAMMENSETZUNG ENTHALTEND TRIMETHYLOLETHANTRIGLYCIDYLETHER
LIANT COMPRENANT L'ETHER TRIGLYCIDYLIQUE DU TRIMETHYLOLETHANE

(43) Date of publication of application: 01.02.2023
(73) Proprietor: Jotun A/S, 3202 Sandefjord (NO)
(72) Inventor: REIAN, Gard, 3200 Sandefjord (NO)
(74) Representative: Marks & Clerk LLP

(56) References cited:
- EP-A2- 3 077 463
- WO-A1-2020/070252
- US-A- 4 783 518
- US-A1- 2014 107 313

## Description

### INTRODUCTION

The present invention relates to a binder system comprising an epoxy-based binder, trimethylolethane triglycidyl ether, a curing agent and a homopolymerisation accelerator and to a method and kit for preparing the binder system. The invention also relates to a coating composition comprising the binder system, and to a method and kit for preparing the coating composition, as well as to containers containing either the binder system or coating composition. Additionally, the invention relates to a method of preparing a coating on a surface and to the coatings per se. Uses of trimethylolethane triglycidyl ether in a binder system forms another aspect of the invention.

### BACKGROUND

The interior of metal tanks used to store bulk liquid chemicals are normally coated with a chemically resistant coating to protect the underlying metal. This includes, for example, tanks present on cargo ships as well as tanks present on shore, e.g. at chemical production facilities, where the bulk chemicals are produced, and at large scale manufacturing sites, where bulk volumes of chemicals are required.

The chemically resistant coating performs two different functions. It protects the underlying metal, usually steel, from chemical attack (e.g. corrosion) and it protects the contents of the tank from contamination. To fulfil the latter function, it is important that the coating does not absorb liquid chemicals it is contact with since absorbed chemicals subsequently leach out and contaminate later tank contents.

The chemically resistant coating also needs to be easy to clean in between different loads as well as easy to apply, including to, e.g. the interior of tanks, which can include non-horizontal surfaces as well as large surface areas.

At present, tank liner coatings that have a high chemical resistance are typically made from novolac epoxy-based resin and resorcinol diglycidyl ether (RDGE). These coatings have been found to provide a high resistance to absorption of chemicals. The high chemical resistance is believed to be obtained due to the high crosslinking density achieved by using the combination of RDGE and novolac epoxy resin. This type of coating is usually cured using a dual cure mechanism involving both amine-epoxy curing and epoxy-homopolymerization. The presence of the benzene ring in RDGE is generally believed to improve its compatibility with novolac epoxy-based resin, and to be a key feature in the provision of high performance chemically resistant coatings.

However, coatings made from novolac epoxy-based resin and resorcinol diglycidyl ether (RDGE) have a major drawback. RDGE is believed to be a carcinogen based on animal studies. Sigma-Aldrich, for example, states under its safety profile that RDGE is a "confirmed carcinogen with experimental carcinogenic and tumorigenic data. Poison by intraperitoneal route. Moderately toxic by ingestion. Mutation data reported". Under "Carcinogenicity" it states "Diglycidyl resorcinol ether is reasonably anticipated to be a human carcinogen based on sufficient evidence of carcinogenicity from studies in experimental animals." The suspected carcinogenicity of RDGE significantly complicates both the preparation and application of coating compositions comprising it, since additional safely precautions need to be taken to avoid exposure to it. Eventually its HSE profile may cause it to be banned from use.

EP-A-3077463 discloses coating compositions preferably comprising less than 10 wt% RDGE.

### SUMMARY OF INVENTION

Viewed from a first aspect the present invention provides a binder system comprising:
(i) an epoxy-based binder;
(ii) trimethylolethane triglycidyl ether;
(iii) a curing agent; and
(iv) a homopolymerisation accelerator,
wherein the wt% of trimethylolethane triglycidyl ether, based on the total dry weight of binder system, is higher than the wt% of epoxy-based binder, based on the total dry weight of the binder system.

Viewed from a further aspect the present invention provides a method for preparing a binder system as hereinbefore defined, comprising mixing:
(i) an epoxy-based binder;
(ii) trimethylolethane triglycidyl ether;
(iii) a curing agent; and
(iv) an homopolymerisation accelerator.

Viewed from a further aspect the present invention provides a kit for preparing a binder system as hereinbefore defined, comprising:
(a) a first container containing an epoxy-based binder and trimethylolethane triglycidyl ether; and
(b) a second container containing a curing agent and an homopolymerisation accelerator.

Viewed from a further aspect the present invention provides a coating composition comprising the binder system as hereinbefore defined.

Viewed from a further aspect the present invention provides a container containing a binder system as hereinbefore defined or a coating composition as hereinbefore defined.

Viewed from a further aspect the present invention provides a method for preparing a coating composition as hereinbefore defined, comprising mixing:
(i) a binder system as hereinbefore defined; and
(ii) one or more other ingredients.

Viewed from a further aspect the present invention provides a method of providing a coating on a surface, preferably a metal surface, wherein said method comprises:
(i) applying a composition as hereinbefore defined; and
(ii) curing said composition to form a coating on the surface.

Viewed from a further aspect the present invention provides a coating obtainable by the method hereinbefore described.

Viewed from a further aspect the present invention provides a coating comprising a binder system as hereinbefore defined or a coating composition as hereinbefore defined.

Viewed from a further aspect the present invention provides the use of a composition as hereinbefore defined to form a coating on at least one surface of a substrate or article, preferably a tank.

Viewed from a further aspect the present invention provides the use of a binder system as hereinbefore defined to form a coating composition.

Viewed from a further aspect the present invention provides the use of trimethylolethane triglycidyl ether to form a binder system as hereinbefore defined.

### DEFINITIONS

As used herein the term "coating composition" refers to a composition that, when applied to a surface, forms a film or coating thereon.

As used herein the term "binder" refers to a polymer which forms a continuous film on a substrate surface when applied thereto. The other components of the composition are dispersed throughout the binder.

As used herein the term "binder system" refers to a system comprising an epoxy-based binder, trimethylolethane triglycidyl ether, curing agent and homopolymerisation accelerator as well as, e.g. silane, and reactive diluent.

As used herein the term "epoxy-based" refers to a polymer or oligomer comprising epoxy groups and/or modified epoxy groups. The term epoxy-based binder encompasses binders that have the traditional epoxy backbone but where epoxy end-groups are modified with, e.g. acrylic or methacrylic functional groups that can be cured with the same curing agents as the epoxy groups. Often the epoxy resin will comprise at least some epoxy groups. The term epoxy is used interchangeably with epoxide.

As used herein the term "epoxy" refers to a three-atom cyclic ether.

As used herein the phrase "equivalent epoxy weight" or "EEW" refers to the number of epoxide equivalents in 1 kg of resin. It is measured by ASTM D-1652.

As used herein the term "curing agent" refers to a compound which, when mixed with a binder, e.g. epoxy-based binder, produces a cured or hardened coating by generating cross-links within the polymer. Sometimes curing agents are referred to as hardeners.

As used herein the term homopolymerisation accelerator refers to compounds which increase the rate of epoxy-epoxy homopolymerisation during a curing reaction to cure or harden a coating.

As used herein the term "weight % (wt%)", when used in relation to individual constituents of the composition, e.g. epoxy-based resin, etc., refers to the actual weight of constituent, i.e. without volatile components present, unless otherwise specified.

As used herein the term "weight % (wt%)", when used in relation to the coating compositions, refers to the weight relative to the total weight of the composition, i.e. including non-volatile and volatile components, unless otherwise specified.

As used herein the term "Volatile Organic Compounds" refers to compounds having a boiling point ≤ 250°C at 101.3 kPa. This is the definition given in EU Directive 2004/42/CE.

As used herein the term "solvent-free" refers to a composition comprising less than 10 g/L VOCs.

As used herein the term "molecular weight" refers to weight average molecular weight (Mw), unless otherwise specified. It is determined by Gel Permeation Chromatography.

### DETAILED DESCRIPTION OF THE INVENTION

The present invention relates to a binder system comprising:
(i) an epoxy-based binder;
(ii) trimethylolethane triglycidyl ether;
(iii) a curing agent; and
(iv) a homopolymerisation accelerator,
wherein the wt% of trimethylolethane triglycidyl ether, based on the total dry weight of binder system, is higher than the wt% of epoxy-based binder, based on the total dry weight of the binder system.

The binder system of the present invention generates a tightly cross linked, high density, polymer network, which minimises absorption of chemical. This means the binder system may be advantageously used in coating compositions designed for the interior of tanks, such as cargo tanks on ships and product storage tanks on shore. In contrast to binder systems, known in the art, which comprise resorcinol diglycidyl ether (RDGE), the binder system of the present invention does not comprise any compounds with suspected or known carcinogenicity. The binder system of the present invention therefore has a significantly improved HSE profile compared to RDGE binder systems, without any compromise in performance.

### Epoxy-based binder system

The epoxy-based binder system of the present invention comprises the combination of one or more epoxy-based binders, trimethylolethane triglycidyl ether, one or more curing agents, a homopolymerisation accelerator and optionally a silane.

Preferably the system does not comprise a reactive diluent in addition to the trimethylolethane triglycidyl ether. The presence of an additional reactive diluent may interfere with the cross linking reactions and ultimately reduce the density of the polymer network.

### Trimethylolethane triglycidyl ether

Trimethylolethane triglycidyl ether is a low viscosity epoxy compound represented by formula I below. It has a molecular weight of 288.34 g/mol and Cas nr. 68460-21-9.

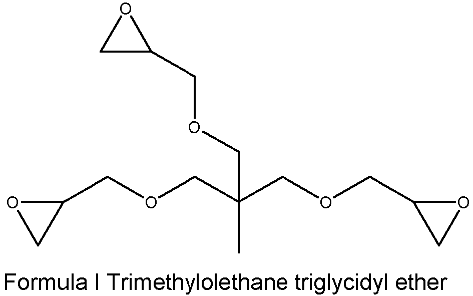

Trimethylolethane triglycidyl ether is commercially available, e.g. from Sigma Aldrich and Huntsman.

The trimethylolethane triglycidyl ether is preferably present in an amount of 50 to 90 wt% of the binder system, more preferably 60 to 80 wt% and still more preferably 60 to 70 wt% of the total dry weight of the binder system.

In preferred binder systems of the invention the trimethylolethane triglycidyl ether is present in an amount of 50 to 90 wt%, more preferably 70 to 87 wt%, and still more preferably 75 to 85 wt%, based on the total dry weight of (i) an epoxy-based binder and (ii) trimethylolethane triglycidyl ether.

In preferred binder systems of the invention the weight ratio of trimethylolethane triglycidyl ether to epoxy-based binder is 1:1 to 100:1, more preferably 1.1:1 to 20:1 and still more preferably 2:1 to 10:1. In one preferred binder system the weight ratio of trimethylolethane triglycidyl ether to epoxy-based binder is more than 3:1, preferably more than 4:1. The incorporation of a relatively large amount of trimethylolethane triglycidyl ether compared to epoxy-binder system is believed to be important in the ability of the binder system to produce a high density polymer network.

Trimethylolethane triglycidyl ether is not proven, nor suspected, to have any concerns with regards to being carcinogenetic and is therefore a much safer alternative than using resorcinol diglycidyl ether (RDGE) which is traditionally used in high chemical resistant coatings. Preferred binder systems of the invention do not comprise RDGE. Further preferred binder systems of the invention do not comprise an aromatic glycidyl ether, e.g. triglycidyl-p-aminophenol or tris (4-hydroxyphenyl methane triglycidyl ether).

Trimethylolethane triglycidyl ether is an aliphatic diglycidyl ether, which generally have a poorer compatibility with aromatic epoxy resins such as novolac epoxy resins than aromatic diglycidyl ethers. The lack of compatibility causes problems with relatively low reactivity in the epoxy-epoxy homopolymerization reaction and, as a result, it is difficult to achieve highly crosslinked networks. In the present invention is has surprisingly been found that it is possible to replace RDGE with an aliphatic triglycidyl ether, specifically trimethylolethane triglycidyl ether which has a much improved HSE profile compared to RDGE, whilst still obtaining high crosslinking density and excellent chemical resistance.

### Epoxy-based binder

The epoxy-based binder is preferably selected from aromatic or aliphatic epoxy-based binders preferably comprising more than one epoxy group per molecule. The epoxy-groups may be in an internal or terminal position on the epoxy-based binder or on a cyclic structure incorporated into the epoxy-based binder. Preferably the epoxy-based binder comprises at least two epoxy groups so that a crosslinked network can be formed.

It should be understood that the epoxy-based binders of the present invention also encompass binders that have the traditional epoxy backbones but where the epoxy end-groups have been modified with acrylic or methacrylic functional groups that can be cured with the same curing agents as the epoxy-groups.

Suitable aliphatic epoxy-based binders include epoxy and modified epoxy binders selected from cycloaliphatic epoxy such as hydrogenated bisphenol A, hydrogenated bisphenol A novolac, hydrogenated bisphenol F novolac and dicyclopentadiene based binders, glycidyl ethers such as polyglycidyl ethers of polyhydric alcohols, epoxy functional acrylic resins or any combinations thereof.

Suitable aromatic epoxy-based binders includes epoxy and modified epoxy binders selected from bisphenol type epoxy-based binders such as bisphenol A, bisphenol F and bisphenol S, novolac type epoxy-based binders such as phenolic novolac type binders (bisphenol A novolac, bisphenol F novolac, bisphenol S novolac) and cresol novolac type binder or any combinations thereof.

In some preferred binder systems, the epoxy-based binder is an aromatic epoxy-based binder. Preferably, the aromatic epoxy-based binder is derived from a combination of a compound comprising a least one epoxide functionality with an aromatic co-reactant comprising at least two hydroxyl groups.

Preferred epoxy-based binders are novolac, biphenol A and bisphenol F epoxy-based binders or bisphenol A/F epoxy binders.

Particularly preferred epoxy-based binders are novolac epoxy binders because these binders generally give a higher crosslinking density. Preferred novolac epoxy binders are bisphenol A novolac, bisphenol F novolac, bisphenol S novolac and cresol novolac. A particularly preferred epoxy-based binder is bisphenol F novolac. Bisphenol F novolac is also commonly described as epoxy phenol formaldehyde resin.

Novolac epoxy resins are well known in the art. A general structure for novolac epoxy resins is shown in formula II below, wherein n is the number of repeating units and R is H or a substituent.

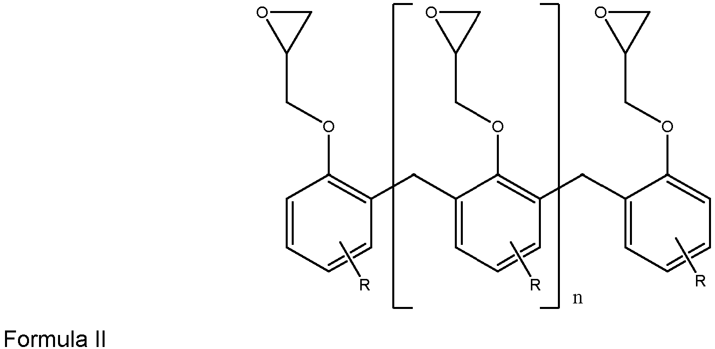

The epoxy-based binder may be a modified epoxy-based binder. Preferably the epoxy-based binder is modified with fatty acids, polypropylene oxide and/or polyethylene oxide. The epoxy-based binder may also be modified with flexible components such as rubber (e.g. chloroprene and butadiene-acrylonitrile rubber), polysiloxane, polyester, polyamide, polyurethane and/or poly(meth)acryl.

The solids content in the epoxy-based binder is preferably more than 70 wt%, preferably more than 80 wt%, preferably more than 90 wt%, and most preferably more than 99 wt%. In further preferred binder systems, the epoxy-based binder is solvent free.

Examples of suitable commercially available epoxy-based binders are:
- Novolac epoxy-based binders: DEN 425, DEN 431 and DEN 438 from Olin
   - Bisphenol A type epoxy-based binders: Epikote 828 from Hexion, Araldite GY 250 from Huntsman Advanced Materials,
   - Bisphenol F epoxy based binders: Epikote 862 from Hexion, YDF- 170 from Kukdo, GY285 from Huntsman, DE 354 from Dow, BFE-170 from CCP, or KF8100 from Kolon.
   - Mixture of bisphenol A and bisphenol F: DER 352 from Dow Chemicals, Epikote 235 from Hexion.

The epoxy-based binder may have an epoxy equivalent weight (EEW) value of 120 to 1000. It is particularly preferred if the EEW is less than 500 such as 150 to 300, especially 150 to 250.

The viscosity of the epoxy-based binder is preferably 15 000 to 70 000 mPa, and more preferably 20 000 to 60 000 mPas, as measured at 50 °C according to ASTM D-445.

The epoxy-based binder is preferably present in 1 to 30 wt% of the binder system, such as 5 to 25 wt% of the binder system, based on the total dry weight of the binder system. More preferably the epoxy-based binder is present in an amount of 7 to 20 wt%, especially 8 to 18 wt% most especially 10 to 15 wt% based on the total dry weight of the binder system. If a blend of epoxy-based binders is used these percentages refer to the total epoxy-based binder content, i.e. adding the wt% of each one.

### Curing agent

The binder system also comprises at least one curing agent. The curing agent can be any curing agent commonly known as a curing agent for epoxy-based binder systems. Preferably it is amine based.

To obtain a crosslinked network the curing agent must contain at least two "reactive" hydrogen atoms. "Reactive" hydrogen atom refers to the hydrogen atom that is transferred from the nucleophile to the oxygen atom of the epoxide during the ring opening reaction. The curing agent typically contains at least two curing reactive functional groups.

Examples of suitable curing agents are thiol curing agents, polythiol curing agents, amine curing agents, polyamine curing agents, amine functional polyamide and/or amino functional polymer curing agents. The curing agent may also alternatively comprise at least one amino functional polysiloxane.

Examples of suitable polythiol curing agents are pentaerythriol tetramercapto propionate. Example of a suitable commercially available polythiol curing agent is GABEPRO^{®} GPM800 from Gabriel performance materials.

One preferred binder system comprises at least one amine functional curing agent. The curing agent typically contains at least two amine groups. The amine groups may be primary or secondary.

Suitable curing agents comprising amines or amino functional polymers are selected from aliphatic amines and polyamines (e.g. cycloaliphatic amines and polyamines), amine functional polyamides, polyether amines, polyimidazoles, polyoxy alkylene amines (e.g. polyoxy alkylene diamines), alkylene amines (e.g. alkylene diamines), aralkyl amines, aromatic amines, Mannich bases (e.g. those sold commercially as "phenalkamines"), polyamines comprising benzylamine structures, amino functional silicones or silanes, and including epoxy adducts and derivatives thereof.

In one preferred binder system the amine functional curing agent comprises a cyclic structure which includes alicyclic amines and modified products of alicyclic amines, preferably polyamines. The term cyclic includes alicyclic, aromatic and heterocyclic polyamines.

In one preferred binder system the amine functional curing agent is a polyamine curing agent comprising one or more benzylamine structures. It is to be understood that polyamine is defined as a compound comprising at least two repeating amine units. Preferably, the polyamine comprises more than three amine groups.

In one preferred binder system the benzylamine group comprises only one amine group.

In one preferred binder system the amine functional curing agent may comprise a benzylated polyalkylene polyamine structure as described in WO2017147138 A1. The benzylated polyalkylene polyamine structure may be further reacted with for example Mannich bases or epoxy-functional compounds to make epoxy-adducts.

In binder systems of the invention adducts of the amine curing agent might also be used. Such adducts can be prepared by reaction of the amine with suitably reactive compounds such as epoxy-binders, epoxy-functional reactive diluent, acrylates, maleates, fumarates, methacrylates or electrophilic vinyl compounds such as acrylonitrile.

In particularly preferred binder systems of the invention the curing agent is a cycloaliphatic amine or polyamine.

Examples of suitable commercially available amine functional curing agents are:
Ancamine 2609, Ancamine 2695, Ancamine 2738, Ancamide 260A, Ancamide 500, Ancamide 506, Ancamide 2386, Ancamine 2759, Ancamine 2760, Ancamine 2712M, Ancamine 1618, Ancamine 2165, Ancamine 2280, Ancamine 2432, Ancamine 2519, Ancamine 2802, Ancamine 2609w, Ancamine 2806, Ancamine 2049, Ancamine 2143, Ancamine 2264, Ancamine 2167 from Evonik, Epikure 3140 from Hexion, GX-483 from Kukdo Chemical, AP5050 from Admark Polycoats, MXDA and Gaskamine 240 from Mitsubishi Gas Chemical Company Inc., Aradur 42 BD and Aradur 943 CH from Huntsman Advanced Materials.

In one particularly preferred binder system, the curing agent is an aliphatic and/or cycloaliphatic polyamine such as the Ancamine curing agents from Evonik.

It will be appreciated that the curing agent can be supplied neat or in a solvent, ideally the curing agent is solvent free.

One or more curing agents might be used in combination. In one preferred binder system, two or more curing agents are used in combination.

The curing agent should cure the epoxy-based binder at temperatures ranging from 0 to 50 °C. It is preferred if the epoxy-based binder system cures at ambient temperatures.

It is common to quote the equivalent weight of the curing agent in terms of the "active hydrogen equivalent weight". The number of "active hydrogen equivalents" in relation to the one or more curing agents is the sum of the contribution from each of the one or more curing agents. The contribution from each of the one or more curing agents to the active hydrogen equivalents is defined as grams of the curing agent divided by the active hydrogen equivalent weight of the curing agent, where the active hydrogen equivalent weight of the curing agent is determined as: grams of the curing agent equivalent to 1 mol of active hydrogen. For adducts with epoxy resins the contribution of the reactants before adduction is used for the determination of the number of "active hydrogen equivalents" in the complete epoxy-based binder system.

It is also common to quote the number of "epoxy equivalents" in the epoxy-based binders. The "epoxy equivalents" is the sum of the contribution from each of the one or more epoxy-based binders and any other component that contains an epoxy such as a silane or a reactive diluent. The contribution from each of the one or more epoxy-based binders to the epoxy equivalents is defined as grams of the epoxy-based binder divided by the epoxy equivalent weight of the epoxy-based binder, where the epoxy equivalent weight of the epoxy-based binder is determined as: grams of the epoxy resin equivalent to 1 mol of epoxy groups. For adducts with epoxy-based binder the contribution of the reactants before adduction is used for the determination of the number of "epoxy equivalents" in the epoxy-based binder system.

Preferably the ratio between the hydrogen equivalents of the totality of the curing agents and the totality of epoxy equivalents (i.e. mole ratio) in the epoxy-based binder system of the present invention is in the range of 0.2 to 0.7, more preferably 0.3 to 0.5.

It will be appreciated that the curing agent is shipped separately to the epoxy-based binder and is only mixed with the epoxy-based binder shortly before application. The mixing ratio of the compositions comprising the epoxy-based binder and the curing agent is, of course, governed by the relative amounts of epoxy and active hydrogens present. Preferably, the mixing ratio in wt% is 1:1 to 200:1 first to second composition, more preferably 5:1 to 15:1 first to second composition and still more preferably 10:1 first to second composition. The curing agent composition and the epoxy-based binder composition are mixed shortly before application to the substrate.

In a preferred binder system, the curing agent may be present in an amount of 1 to 20 wt%, such as 5 to 15 wt%, based on the total dry weight of the binder system.

### Accelerators

The binder system of the present invention is believed to cure via a so-called dual cure mechanism. This means that the binder system is believed to undergo curing by two complementary curing mechanisms. These are: (i) reaction of the epoxy groups of the epoxy resins with the functional groups having an active hydrogen in the curing agent; and (ii) reaction between epoxy groups of the binder system, i.e. epoxy-based binder and trimethylolethane triglycidyl ether. The latter reaction is sometimes referred to a homopolymerisation or epoxy homopolymerisation. The occurrence of the dual-cure mechanism is believed to result in the production of a high density polymer network, which is able to reduce the absorption of liquids when it is present in a coating.

Without wishing to be bound by theory, it is thought that the curing agent present in the binder system, e.g. an amine, reacts via a Sₙ2 reaction with the epoxy groups present in the mixture in an initial cure reaction. In the reaction, the epoxide ring is opened, and a hydrogen atom is transferred from the curing agent, e.g. amine, to the oxygen atom of the epoxide group. The transferred hydrogen is referred to as the "active hydrogen". The epoxy homopolymerisation is generally a slower reaction, but is accelerated by the presence of a homopolymerisation accelerator.

The homopolymerisation accelerator may be selected from tertiary amines, alcohols, imidazoles, organic acids, phenols, sulphonic acids, organic phosphines and salts. Optionally a combination of two or more homopolymerisation accelerators may be used. Imidazoles are preferred homopolymerisation accelerators.

Examples of suitable tertiary amines are triethanol amine, dialkylamino ethanol, triethylene diamine, 1,4-diazabicyclo[2.2.2]octane, 1,8-diaza-bicyclo[5.4.0]undec-7-ene, benzyldimethylamine and 2,4,6-tris(dimethylaminomethyl)phenol. One particularly preferred homopolymerisation accelerator is 2,4,6-tris(dimethylaminomethyl)phenol such as Ancamine K54 from Evonik.

Examples of suitable alcohols are ethanol, 1-propanol, 2-proanol, 1-butanol, 2-butanol, t-butanol, benzyl alcohol, furfuryl alcohol, and other alkyl alcohols, propanediol, butanediol, glycerol and other polyhydric alcohols, triethanolamine, tri-isopropanolamine, dimethylaminoethanol and other β-hydroxy tertiary amines.

Examples of suitable organic acids are acetic acid, propanoic acid, butyric acid, lactic acid, phenyl acetic acid and other alkyl carboxylic acids, malonic acid, oxalic acid, maleic acid, fumaric acid and other dibasic acids or their monoesters, benzoic acid, 4-t-butyl benzoic acid, salicylic acid, 3,5-dichlorosalicylic acid, 4-nitrobenzoic acid and other aromatic acids.

Examples of suitable phenols are alkyl phenols such as nonylphenol.

Examples of suitable sulphonic acids are methanesulphonic acid and other alkyl sulphonic acids, p-toluenesulphonic acid, 4-dodecylbenzenesulphonic acid, and other aromatic sulphonic acids, naphthalene disulphonic acid, di-nonyl naphthalene disulphonic acid and other polyhydric sulphonic acids.

Examples of suitable organic phosphines are tributyl phosphine, methyldiphenyl phosphine, triphenyl phosphine, diphenyl phosphine and phenyl phospine.

Examples of suitable salts are calcium nitrate, calcium naphthenate, ammonium thiocyanate, sodium thiocyanate, potassium thiocyanate, imidazolinium thiocyanate, lithium tetrafluoroborate, lithium bromide, lithium trifluoroacetate, calcium chloride, ytterbium triflate, lithium perchlorate, zinc triflate, lithium nitrate. For all these salts, the cation could be interchanged with lithium, sodium or potassium.

Preferably the homopolymerisation accelerator is an imidazole. Preferred imidazoles are those of formula: 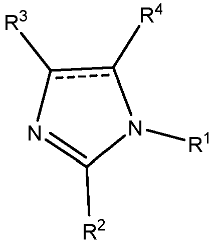 wherein
R¹ is a hydrogen atom, a C1-C10 alkyl group, an aryl group, an arylalkyl group, or a cyanoethyl group;
R² to R⁴ each independently represent a hydrogen atom, a nitro group, a halogen atom, a C1-C20 alkyl group, a C1-C20 alkyl group substituted with a hydroxy group, an aryl group, an arylalkyl group, or a C1-C20 acyl group; and
a dashed line represents a single bond or a double bond.

Representative examples of suitable imidazoles include imidazole, 2-ethyl-4-methylimidazole, 1-methylimidazole, 2-methylimidazole, 4-methylimidazole, 1-benzyl-2-methylimidazole, 2-heptadecylimidazole, 2-undecylimidazole, 2-phenyl-4-methyl-5-hydroxymethylimidazole, 2-phenylimidazole, 2-phenyl-4-methylimidazole, 1-benzyl-2-phenylimidazole, 1,2-dimethylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 2-phenyl-4,5-dihydroxymethylimidazole, and combinations thereof.

Preferred imidazoles include 1-methylimidazole, 2-methylimidazole, 2-phenylimidazole, 2-phenyl-4-methyl imidazole and 2-heptadecylimidazole.

Particularly preferably the homopolymerisation accelerator is a combination of an imidazole and a tertiary amine, e.g. an imidazole and 2,4,6-tris(dimethylaminomethyl)phenol. This combination has been found to produce high density polymer networks in mild curing conditions.

In a preferred binder system, the homopolymerisation accelerator may be present in an amount of 0.1 to 10 wt%, such as 1 to 5 wt%, based on the total dry weight of the binder system.

Accelerators may also be used to speed up the reaction between the epoxy groups of the epoxy resin and the functional groups of the curing agent having an active hydrogen. It should be noted that the homopolymerization accelerators described above generally also speed up the reaction between the epoxy groups of the epoxy resin and functional groups of the curing agent having an active hydrogen.

(Meth) acrylic esters are also known to speed up the curing reaction between the epoxy groups of the epoxy resin and functional groups of the curing agent having an active hydrogen.

Examples of suitable (meth) acrylic esters are those of formula: 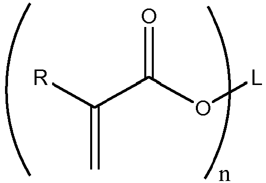 wherein R is H or Me;
n is 2-5; and
L represents the residue of a polyol such as the residue of hexandiol or the residue of a saccharide or sugar alcohol. Thus, at least two OH groups of the polyol carry the acrylate ester shown in the formula above.
L preferably contains only C, H and O atoms. The molecular weight of L is preferably low, such as 1000 g/mol or less.

In a preferred binder system, the total amount of accelerator may be present in an amount of 0.1 to 10 wt%, such as 1 to 5 wt%, based on the total dry weight of the binder system.

### Silane

The binder system of the invention optionally comprises at least one silane. When present, the silane is part of the binder system and reacts with other components of the binder system during curing. The silane functions as an adhesion promoter.

Preferably the silane is a functional silane comprising functional groups that can react with the binder system such as amine and/or epoxy groups. Silanes of use in the invention are generally of low Mw such as less than 400 g/mol. Suitable silanes are of general formula (I) or (II):

(I) Y-R_{(4-z)}SiX_{z}

wherein z is an integer from 1 to 3,

   (II) Y-R_{(3-y)}R¹SiX_{y}
wherein y is an integer from 1 to 2,
each R is a hydrocarbyl group having 1 to 12 C atoms optionally containing an ether or amino linker,
R¹ is a hydrocarbyl group having 1 to 12 C atoms;
each X independently represents a halogen group or an alkoxy group; and
Y is a functional group bound to R that can react with the epoxy-based binder and/or the curing agent.

Preferably Y is a isocyanate, epoxy, amino, hydroxy, carboxy, thiol, acrylate, or methacrylate group, more preferred epoxy, amino, acrylate or methacrylate groups, most preferred epoxy or amino group. It is particularly preferred if Y is an epoxy group. The Y group can bind to any part of the chain R. It will be appreciated that where Y represents an epoxy group then R will possess at least two carbon atoms to allow formation of the epoxide ring system.

In one particularly preferred silane Y is an amino group or epoxy group. The amino groups are preferably NH₂. Preferably Y is an epoxy group.

If the Y group is an amino group that can react with the epoxy-based binder, it is preferred if the silane is provided separately from the epoxy-based binder together with the curing agent.

Each X independently represents a halogen group or an alkoxy group. It is especially preferred if X is an alkoxy group such as a C1-6 alkoxy group, especially methoxy or ethoxy group. It is also especially preferred if there are two or three alkoxy groups present. Thus z is ideally 2 or 3, especially 3.

Subscript y is preferably 2.

R¹ is preferably C1-4 alkyl such as methyl.

R is a hydrocarbyl group having up to 12 carbon atoms. By hydrocarbyl is meant a group comprising C and H atoms only. It may comprise an alkylene chain or a combination of an alkylene chain and rings such as phenyl or cyclohexyl rings. The term "optionally containing an ether or amino linker" implies that the carbon chain can be interrupted by a -O- or -NH- group in the chain, e.g. to form a silane such as [3-(2,3-Epoxypropoxy)propyl] trimethoxysilane:

H₂COCHCH₂OCH₂CH₂CH₂Si(OCH₃)₃.

R is preferably an unsubstituted (other than Y obviously), unbranched alkyl chain having 2 to 8 C atoms.

A preferred silane general formula is therefore of structure (III)

(III) Y'-R'(_{4-z'})SiX'_{z}

wherein z' is an integer from 2 to 3,
R' is a unsubstituted, unbranched alkyl chain having 2 to 8 C atoms optionally containing an ether or amino linker,
Y' is an amino or epoxy functional group bound to the R' group, and
X' represents an alkoxy group.

Examples of such silanes are the many representatives of the products manufactured by Degussa in Rheinfelden and marketed under the brand name of Dynasylan(R)D, the Silquest(R) silanes manufactured by Momentive, and the GENOSIL(R) silanes manufactured by Wacker.

Specific examples include methacryloxypropyltrimethoxysilane (Dynasylan MEMO, Silquest A- 174NT), 3-mercaptopropyltri(m)ethoxysilane (Dynasylan MTMO or 3201; Silquest A-189), 3-glycidoxypropyltrimethoxysilane (Dynasylan GLYMO, Silquest A-187), tris(3-trimethoxysilylpropyl) isocyanurate (Silquest Y- 11597), gamma-mercaptopropyltrimethoxysilane (Silquest A-189), beta-(3,4-epoxycyclohexyl)ethyltrimethoxysilane (Silquest A-186), gamma-isocyanatopropyltrimethoxysilane (Silquest A-Link 35, Genosil GF40), (methacryloxymethyl)trimethoxysilane (Genosil XL 33), isocyanatomethyl)trimethoxysilane (Genosil XL 43), aminopropyltrimethoxysilane (Dynasylan AMMO; Silquest A-I 110), aminopropyltriethoxysilane (Dynasylan AMEO) or N-(2-aminoethyl)-3-aminopropyltrimethoxysilane (Dynasylan DAMO, Silquest A-I 120) or N-(2-aminoethyl)-3-aminopropyltriethoxysilane, triamino- functional trimethoxysilane (Silquest A- 1130), bis(gamma- trimethoxysilylpropyl)amine (Silquest A-I 170), N-ethyl-gamma- aminoisobytyltrimethoxy silane (Silquest A-Link 15), N-phenyl-gamma-aminopropyltrimethoxysilane (Silquest Y-9669), 4-amino-3,3-dimethylbutyltrimethoxysilane (Silquest Y-I 1637), (N-cyclohexylaminomethyl)triethoxysilane (Genosil XL 926), (N-phenylaminomethyl)trimethoxysilane (Genosil XL 973), Deolink Epoxy TE and Deolink Amino TE (D.O.G Deutsche Oelfabrik) and mixtures thereof.

Other specific silanes of interest include 3 -Aminopropyltriethoxysilane, 3 - Aminopropyltrimethoxysilane, N-(Aminoethyl)-aminopropyltrimethoxysilane H₂NCH₂CH₂NHCH₂CH₂CH ₂Si(OCH₃)₃, 3-aminopropylmethyldiethoxysilane, 3-(2-aminoethylamino)propylmethyldimethoxysilane, (H₂NCH₂CH₂NHCH₂CH₂CH₂SiCH₃(OCH₃)₂), [3-(2,3-Epoxypropoxy)propyl]triethoxysilane (H₂COCHCH₂OCH₂ CH₂CH₂Si(OCH₂CH₃)₃, [3-(2,3-Epoxypropoxy)propyl]trimethoxysilane (H₂COCHCH₂OCH₂CH₂CH₂ Si(OCH₃)₃ ).

The use of silane 3-glycidoxypropyltrimethoxysilane is especially preferred. A mixture of silanes might also be used.

The amount of silane present in the binder system may be 0.1 to 10 wt%, preferably 0.5 to 5 wt%, more preferably 1 to 3 wt%, based on the total dry weight of the binder system. If a blend of silanes is used these percentages refer to the total silane content, i.e. adding the wt% of each one.

It will be appreciated that if the silane comprises functional groups that can react with the epoxy-based binder it should be kept separate from the epoxy-based binder in the kit used to form the coating composition.

### Reactive diluent

The binder system of the present invention preferably does not comprise a reactive diluent, in particularly an epoxy-functional reactive diluent.

The reactive diluent is different from the epoxy binder. Generally the epoxy-functional reactive diluent is of low molecular weight such as less than 500 g/mol. Usually the viscosity of the reactive diluent is <100 cp, preferably <50 cP, preferably <35 cp. It is therefore a liquid at 23°C and atmospheric pressure.

Examples of typical epoxy-functional reactive diluents include include phenyl glycidyl ether, alkyl glycidyl ether (number of carbon atoms in alkyl group: 1 to 16), glycidyl ester of neodecanoic acid (R¹ R² R³C-COO-Gly, where R¹ R² R³ are alkyl groups such as C8 to C10 alkyl and Gly is a glycidyl group), olefin epoxide (CH₃-(CH₂)n-Gly, wherein n=11 to 13, Gly: glycidyl group), 1,4-butanediol diglycidyl ether (Gly-O-(CH₂)₄-O-Gly), 1,6-hexanediol diglycidyl ether (Gly-O-(CH₂)₆-O-Gly), neopentyl glycol diglycidyl ether (Gly-O-CH₂-C(CH₃)₂-CH₂-O-Gly), trimethylolpropane triglycidyl ether (CH₃-CH₂-C(CH₂-O-Gly)₃), and C1-20- alkylphenyl glycidyl ether (preferably C1-5 alkylphenylglycidyl ether), e.g. methylphenyl glycidyl ether, ethylphenyl glycidyl ether, propylphenyl glycidyl ether and para tertiary butyl phenyl glycidyl ether (p-TBPGE), reaction products of epichlorohydrin and an oil obtained from the shells of cashew nuts.

Preferably the binder system does not comprise a reactive diluent. This is because, if present, the reactive diluent forms part of the binder system and reacts with other components of the binder system during the curing process. This is believed to disrupt the high density polymer network that is otherwise formed by the binder system of the present invention.

### Other binder system components

Preferably the binder system of the invention does not comprise co-binders. It is believed that the presence of a co-binder decreases the density of the polymer network, and therefore increase the absorption ability of coatings comprising the binder. Examples of typical co-binders are saturated polyester resins, polyvinylacetate, polyvinylbutyrate, copolymers of vinyl acetate, vinyl isobutyl ether, copolymers of vinyl chloride and vinyl isobutyl ether, styrene co-polymers such as styrene/butadiene co-polymers, acrylic resins, polysiloxane, hydroxy-acrylate copolymers, fatty acids and cyclized rubbers.

Preferably the binder system of the present invention does not comprise a urone based curing agent. Particularly preferably the binder system of the present invention does not comprise a urone selected from 1,3-diphenylurea, benzylurea, 1,1 -dimethyl-3-phenylurea, N-ethylurea, N-(2-Chloro-4-pyridyl)-N'-phenylurea, N,N'-dibenzylurea, N-(4-chlorophenyl) N,N-dimethyl urea, N-(4-chlorophenyl) n,n-Dimethyl urea, N-phenyl-N,N- dimethyl urea, 2,4 toluene bis dimethyl urea, 2,4 toluene bis dimethyl urea, cycloaliphatic bisurea, toluene bis dimethyl urea, 4,4' methylene bis (phenyl dimethyl urea), N,N-dimethyl- N'-[3-(trifluoromethyl)phenyl]-urea, 3-(3,4-dichlorophenyl)-1,1-dimethylurea and combinations thereof.

Preferably the binder system of the present invention does not comprise a hydrazide curing agent, e.g. an aromatic hydrazide, or an aliphatic hydrazide. Particularly preferably the binder system of the present invention does not comprise adipic dihydrazide, adipic acid dihydrazide, 3,4-diaminobenzhydrazide, succinic dihydrazide, 4-aminobenzoic hydrazide, (+)-biotinamidohexanoic acid hydrazide, oxalyldihydrazide, maleic hydrazide, dodecanoic acid dihydrazide, isophthalic acid dihydrazide, 1,4-cyclohexyl dihydrazide, 4,4'- (propane-1,3-diylbisoxy) dibenzoic dihydrazide, terephthalic acid dihydrazide, isophthalic dihydrazide, and combinations thereof.

Preferably the binder system of the present invention does not comprise a polyphenolic resin.

### Coating composition

The binder system of the present invention is preferably present in a coating composition. The coating composition may consist of the binder system as hereinbefore described. Alternatively the coating composition may comprise further components. Preferred further components are described below.

Preferably the coating composition comprises 20-80 wt% binder system, more preferably 30-70 wt% binder system and still more preferably 40-60 wt% binder system, based on the total weight of the coating composition. Preferably the coating composition comprises 20-80 wt.% binder system, more preferably 30-70 wt% binder system and still more preferably 40-60 wt% binder system, based on the total dry weight of the coating composition.

Preferably the coating composition comprises 15-60 wt% trimethylolethane triglycidyl ether, more preferably 20-50 wt% trimethylolethane triglycidyl ether and still more preferably 25-40 wt% trimethylolethane triglycidyl ether, based on the total weight of the coating composition. Preferably the coating composition comprises 15-60 wt% trimethylolethane triglycidyl ether, more preferably 20-50 wt% trimethylolethane triglycidyl ether and still more preferably 25-40 wt% trimethylolethane triglycidyl ether, based on the total dry weight of the coating composition.

Preferably the coating composition comprises 1-30 wt% curing agent, more preferably 2-15 wt% curing agent and still more preferably 3-10 wt% curing agent, based on the total weight of the coating composition. Preferably the coating composition comprises 1-30 wt% curing agent, more preferably 2-15 wt% curing agent and still more preferably 3-10 wt% curing agent, based on the total dry weight of the coating composition.

Preferably the coating composition comprises 0.1-10 wt% homopolymerisation accelerator, more preferably 0.5-7 wt% homopolymerisation accelerator and still more preferably 1-5 wt% homopolymerisation accelerator, based on the total weight of the coating composition. Preferably the coating composition comprises 0.1-10 wt% homopolymerisation accelerator, more preferably 0.5-7 wt% homopolymerisation accelerator and still more preferably 1-5 wt% homopolymerisation accelerator, based on the total dry weight of the coating composition.

Preferably the coating composition comprises 0.1-10 wt% silane, more preferably 0.2-5 wt% silane and still more preferably 0.5-2.5 wt% silane, based on the total weight of the coating composition. Preferably the coating composition comprises 0.1-10 wt% silane, more preferably 0.2-5 wt% silane and still more preferably 0.5-2.5 wt% silane, based on the total dry weight of the coating composition.

Preferably the coating composition comprises 0-15 wt% reactive diluent, more preferably 0.1-10 wt% reactive diluent and still more preferably 0.5-5 wt% reactive diluent, based on the total weight of the coating composition. Preferably the coating composition comprises 0-15 wt% reactive diluent, more preferably 0.5-10 wt% reactive diluent and still more preferably 1-5 wt% reactive diluent, based on the total dry weight of the coating composition.

Preferably the coating composition comprises 0-5 wt% solvent, more preferably 0-4 wt% solvent and still more preferably 0-2.5 wt% solvent.

### Fillers

The coating composition of the invention may comprise one or more fillers. A wide variety of fillers may be used. Examples of suitable fillers include barium sulphate, titanium dioxide, zinc oxide, aluminium oxide, carbonates, borates, silica, silicates such as Feldspar, Kaolin and wollastonite, heavy metal oxides such as cerium oxide, lanthanum oxide and zirconium oxide, mica, diatomaceous earth and bentonite clay.

Particularly preferred fillers are titanium dioxide, aluminium dioxide, feldspar, kaolin, wollastonite and barium sulphate. It is preferred if more than one type of filler is used in the coating compositions of the invention.

Flaky fillers having a lamellar or plate-like structure may be used in the coating compositions of the invention such as mica, talc and glass flakes.

Preferably, the aspect ratio of the flaky filler is more than 3, such as more than 6, preferably more than 10. The aspect ratio can be measured by for example using scanning electron microscopy (SEM).

The thickness of the flaky filler is preferably 0.1 to 15 µm, more preferably 0.5 to 10 µm and still more preferably 1.0 to 8.0 µm. The thickness of the flaky filler can be measured by, for example, scanning electron microscopy (SEM).

The particle sizes and thickness of the flaky fillers referred to herein are the size of the flakes when they are added to the composition and prior to any extrusion or milling process.

Preferred flaky fillers are talc, mica and glass flakes.

Spherical filler particles may also be used in the coating compositions of the present invention.

The spherical filler particles may be organic or inorganic spherical filler particles. Preferably the spherical filler particles are inorganic spherical filler microparticles.

The spherical filler particles may be hollow or non-hollow. In some preferred compositions the spherical filler particles are hollow. This means the particles have a void or cavity in their centres. This void or empty space is filled with gas, preferably air.

Suitable hollow, inorganic, spherical, filler particles are commercially available. Examples of suitable commercially available hollow, inorganic, spherical filler particles include FilliteCenosphere, Poraver (expanded glass), Thermospheres, Omega spheres (available from e.g. 3M, Trelleborg, Potters, SMC minerals) and Hollolite.

Preferably the hollow, inorganic, spherical, filler particles have a low density, e.g. the density of the hollow, inorganic, spherical, filler particles might be 0.1 to 1 gcm⁻³, more preferably 0.2 to 0.8 gcm⁻³, and still more preferably 0.25 to 0.5 gcm⁻³, e.g. as specified on the technical specification provided by suppliers.

The inorganic, spherical, filler particles may comprise, and more preferably consist, of glass, ceramic, calcium aluminium cement or metal oxide, preferably glass.

Optionally the inorganic, spherical, filler particles may be surface treated.

Preferably the inorganic, spherical, filler microparticles have a Z-average diameter of 1.0 to 100 µm, more preferably 1.0 to 80 µm and still more preferably 10-50 µm, as determined by ISO 22412:2017 using a Malvern Mastersizer 2000.

Fillers are preferably present in the coating composition of the invention in an amount of 0-70 wt.%, preferably 10-60 wt.%, more preferably 20-50 wt.% based on the total weight of the coating composition. Fillers are preferably present in the coating composition of the invention in an amount of 0-70 wt.%, preferably 10-60 wt.%, more preferably 20 - 50 wt.% based on the total dry weight of the coating composition.

### Additives

The coating composition of the invention optionally comprises a wide variety of additives. Examples of additives that are optionally present in the coating composition include colour pigments, rheology modifiers (anti-sagging/anti-settling agent), thickeners, anti-corrosive agents, drying agents, dispersing agents, surface modifying agents, plasticizer and adhesion promoters. Any conventional additives may be present.

Additional additives are preferably present in the coating composition an amount of 0 to 50 wt%, more preferably 0.1-30 wt%, still more preferably 0.1 to 20 wt% and particularly preferably 0.5 to 10 wt%, based on the total weight of the coating composition.

Examples of color pigments include titanium white, red iron oxide, yellow iron oxide, black iron oxide, carbon black and organic color pigments.

As the rheology modifier, a thixotropic agent, such as polyamide wax, diatomaceous earth, polyethylene wax, fumed silica or a bentonite-based thixotropic agent, may be employed. Examples of such anti-sagging/anti-settling agents include Crayvallac Ultra, Crayvallac LV, both from Arkema, Thixatrol ST and Thixatrol Max, both from Elementis, Disparlon 6650 from Kusumoto Chemicals Ltd and Celite from Imerys

It may also be useful to include anticorrosive components in the coating composition. Examples of suitable anticorrosive components are zinc phosphate, zinc oxide, zinc dust, zinc flakes and aluminium flakes..

### Compositions

Preferred coating compositions of the invention comprise:
(i) 20-80 wt%, preferably 40-60 wt% an epoxy-based binder;
(ii) 15-60 wt%, preferably 25-40 wt% trimethylolethane triglycidyl ether;
(iii) 1-30 wt%, preferably 3-10 wt% curing agent; and
(iv) 0.1-10 wt%, preferably 1-5 wt% homopolymerisation accelerator,
wherein wt% is based on the total dry weight of the composition.

Particularly preferred coating compositions of the invention comprise:
(i) 20-80 wt%, preferably 40-60 wt% an epoxy-based binder;
(ii) 15-60 wt%, preferably 25-40 wt% trimethylolethane triglycidyl ether;
(iii) 1-30 wt%, preferably 3-10 wt% curing agent;
(iv) 0.1-10 wt%, preferably 1-5 wt% homopolymerisation accelerator; and
(v) 0.1-10 wt%, preferably 0.5-2.5 wt% silane.
wherein wt% is based on the total dry weight of the composition.

Further particularly preferred coating compositions of the invention comprise 0.05-5 wt%, and preferably 0.1-2 wt% thixotropic agent, wherein wt% is based on the total dry weight of the composition.

Further particularly preferred coating compositions of the invention comprise 1-10 wt%, and preferably 2-6 wt% colour pigments, wherein wt% is based on the total dry weight of the composition.

Further particularly preferred coating compositions of the invention comprise 0-70 wt%, and preferably 5-50 wt% fillers, wherein wt% is based on the total dry weight of the composition.

Preferred coating compositions of the invention have a solids content of least 98 wt%, more preferably at least 99 wt%. Particularly preferably the solids content of the coating compositions of the invention is 100 wt%.

Preferred coating compositions of the invention contain a very low solvent content such as less than 5.0 wt% solvent, especially less than 2.0 wt% solvent, more especially less than 1.0 wt% solvent, e.g. 0.5 wt% or less. Ideally the coating composition is substantially free (e.g. free) of solvent.

The high solids volume and low solvent content leads to lower VOC content. The VOC content of the coating composition is preferably less than 250 g/L, more preferably less than 100 g/L, most preferably less than 50 g/L, for example, the VOC content might be 25 g/L or less, such as 10 g/L or less. This means the coating composition is substantially free of VOCs.

The pot life of the coating composition of the invention is preferably at least 1hr, such as 1 to 3 hrs, e.g. 1.5 to 2.5 hrs. By pot life is meant the time after mixing of the first and second components when the coating composition is still able to be applied to the substrate. Pot lives of less than 30 mins are commercially challenging given the time it takes to coat a large object.

Preferred coating compositions of the invention are sprayable. Particularly preferably the coating composition of the invention is thixotropic. Thus the coating composition flows when shear is applied in a spray apparatus but does now flow once applied to a surface.

The coating composition of the invention adheres well to both substrate and a primer layer on that substrate and offers absorption resistance and rapid hardness. The coating composition also does not comprise RDGE, which has an undesirable HSE profile.

Preferred coating compositions of the present invention provide a coating that is curable at ambient temperature. Particularly preferred coating compositions provide a coating that is curable at temperatures of less than 150 °C, more preferably less than 100 °C, and still more preferably less than 90 °C, each at 50% RH.

Preferred coating compositions of the present invention have a Tg, e.g. as determined by the method described in the examples, of at least 130 °C, more preferably at least 140 °C and still more preferably at least 150 °C.

Further preferred coating compositions of the present invention have a xylene absorption after 1 day, e.g. as determined by the method described in the examples, of less than 0.5 wt%, and preferably less than 0.3 wt%.

Further preferred coating compositions of the present invention have a 1,2-dichloroethane (EDC) absorption after 1 day, e.g. as determined by the method described in the examples, of less than 1 wt%, and preferably less than 0.5 wt%.

### Containers and kits

The present invention also relates to a container containing a binder system or coating composition as hereinbefore described. Suitable containers include cardboard boxes lined with a plastic bag and plastic bags (so called "big bags").

Alternatively, each of the binder system and coating composition of the present invention may be provided in the form of a kit.

The binder system of the present invention is preferably formed from the combination of a first composition (A) and a second composition (B). To prevent premature curing, the binder system of the invention is preferably supplied in two parts, a first composition (A) comprising the epoxy-based binder and trimethylolethane triglycidyl ether and a second composition (B) comprising the curing agent and homopolymerisation accelerator.

Similarly, the coating composition of the present invention is preferably formed from the combination of a first composition (A) and a second composition (B). To prevent premature curing, the coating composition of the invention is preferably supplied in two parts, a first composition (A) comprising the epoxy-based binder and trimethylolethane triglycidyl ether and a second composition (B) comprising the curing agent and homopolymerisation accelerator. The other components of the coating composition may be present in either component (A) or (B) as long as any component present in component (A) does not react with any other component within component (A) and any component present in component (B) does not react with any other component within component (B).

Kits for preparing the binder system and coating composition of the present invention therefore comprise:
(i) a first container containing an epoxy-based binder and trimethylolethane triglycidyl ether; and
(ii) a second container containing a curing agent and a homopolymerisation accelerator.

Preferred kits further comprise a silane, particularly preferably in the first container.

Preferred kits further comprise a thixotropic agent, particularly preferably in the first container.

Preferred kits further comprise colour pigment, particularly preferably in the first container.

Preferred kits further comprise a filler and/or extender, particularly preferably in the first container.

### Manufacture

The present invention also relates to a process for preparing a binder system and/or coating composition as hereinbefore described comprising mixing:
(i) an epoxy-based binder;
(ii) trimethylolethane triglycidyl ether;
(iii) a curing agent; and
(iv) a homopolymerisation accelerator,

In preferred methods of the invention, the binder and trimethylolethane triglycidyl ether are premixed and separately the curing agent and homopolymerisation accelerator are premixed. The two resulting mixtures are then combined and mixed.

When preparing a coating composition comprising further ingredients, these ingredients are preferably premixed with the binder and trimethylolethane triglycidyl ether. When present, the silane is preferably premixed with the binder and trimethylolethane triglycidyl ether. When present, the thixotropic agent is preferably premixed with the binder and trimethylolethane triglycidyl ether. When present, the colour pigments are preferably premixed with the binder and trimethylolethane triglycidyl ether. When present, the filler/extender is preferably premixed with the binder and trimethylolethane triglycidyl ether.

Any conventional mixing equipment may be used. For example, the various constituents may be mixed together using a high speed disperser, a ball mill, a pearl mill, a three-roll mill, an inline mixer etc.

Conveniently the binder system and/or coating composition is supplied as a kit as herein before described. It will be appreciated that the relative amounts of each component within any part of the kit will be determined by the final wt% values in the coating composition and the relative mixing ratios.

### Application to surfaces, coatings and coating systems

The present invention also relates to a method for coating a surface, preferably a metal surface, wherein said method comprises:
(i) applying a composition as hereinbefore described; and
(ii) curing said composition to form a coating on the surface.

Optionally the surface is pre-treated prior to application of the coating composition of the invention. Optionally the surface is coated with a primer composition prior to application of the coating composition of the invention. Thus the coating composition of the present invention may be part of a coating system. It is however preferred if the coating composition is applied directly on to the surface.

The coating composition of the invention may be applied to a substrate by any conventional coating method, e.g. spraying, rolling, dipping etc. Preferably the coating composition is applied by spraying, and more preferably by airless spraying. Spraying is preferred as it enables large surface areas to be coated in a uniform manner. Additionally spraying can be used to coat non-horizontal surfaces. Preferably the substrate is metal, in particular steel.

Preferably the coating composition of the invention is applied as a single layer. Optionally the layer can be applied in a single step or in multiple steps, with drying and curing in between in each step.

The present invention also relates to a coating comprising a coating composition as hereinbefore described. Optionally the coating is applied in a number of steps, wherein a first layer of the coating is applied, dried and cured, then a subsequent layer of coating is applied. Preferably the number of application steps is minimised. Preferably the layer of coating applied in a single step is 50-1000 mm, more preferably 100-500 mm.

The coating composition of the present invention may be used to form a single layer coating or a multilayer coating (i.e. a coating system).

### Curing

Preferably the coating of the present invention is cured. Thus, once a substrate is coated with the coating composition of the invention, the coating is preferably cured. Preferably curing takes place in two stages. In a first stage, curing is preferably at ambient temperature (i.e. 20 °C). In a second stage, curing is preferably at 50-100 °C, more preferably 60-90 °C and still more preferably 70-85 °C. It is thought that the "hot curing" in the second stage promotes the epoxy homopolymerisation reaction that is believed to be important in achieving a high-density polymer network.

### Substrate and articles

The present invention also relates to a substrate coated with a coating composition as hereinbefore described or a coating as hereinbefore described. The coating composition of the invention may be applied to any substrate. Representative examples of substrates include metal substrate (steel, galvanized steel, aluminium, copper), glass, ceramic, and polymeric materials (e.g. plastics). A preferred substrate is a metal substrate. The coating of the present invention provide a protective coating, and in particular a chemically resistant coating, on such substrates.

The types of metal substrates that are preferably coated with coatings of the present invention are those which are in contact with chemicals, e.g. bulk liquid chemicals. Examples of metal substrates include storage tanks (e.g. on cargo ships, product storage), process vessels, pressure vessels, reactor tanks, secondary containment, containment bunds, bund walls, structures in chemically aggressive facilities, and areas at risk of exposure to severe chemical spills. A particularly preferred substrate is a metal tank, and especially the internal surface of metal tanks, such as those on cargo ships or at product storage facilities on shore.

The substrate may be partially, or completely coated, with the coating composition or coating of the invention. Preferably, however, all of the substrate is coated with the coating composition or coating of the invention. In the case of a tank, preferably internal walls are coated with the coating composition of the invention.

Preferably the coating has a total dry thickness of 50-1000 mm, more preferably 100-500 mm

Preferred coatings of the present invention have a Tg, e.g. as determined by the method described in the examples, of at least 130 °C, more preferably at least 140 °C and still more preferably at least 150 °C.

Further preferred coatings of the present invention have a xylene absorption after 1 day, e.g. as determined by the method described in the examples, of less than 0.5 wt%, and preferably less than 0.3 wt%.

Further preferred coatings of the present invention have an EDC absorption after 1 day, e.g. as determined by the method described in the examples, of less than 1 wt%, and preferably less than 0.5 wt%.

### Uses

The present invention also provides the use of a composition as hereinbefore described to form a coating on at least one surface of a substrate or article, preferably a tank. Preferably the surface is a metal surface as hereinbefore described.

The present invention also provides the use of a binder system as hereinbefore described to form a coating composition.

The present invention also provides the use of trimethylolethane triglycidyl ether to form a binder system as hereinbefore described.

The invention will now be described with reference to the following non-limiting examples.

### EXAMPLES

### Materials

The compounds and polymers used in the examples were all available commercially. The compounds and polymers used are summarised in the table below wherein EEW is Epoxy Equivalent Weight and AHEW is Amine Hydrogen Equivalent Weight.

| Components | **Function** | **Properties** |
|---|---|---|
| Epoxy Novolac | Epoxy based binder | VS: 80% in xylene |
| | | EEW= 170 - 190 |
| Trimethylolethane triglycidylether (TMETGE) | Aliphatic, triglycidyl ether (Araldite DY-31 from Hunstman) | 100% solids |
| | | CAS.no.: 68460-21-9 |
| 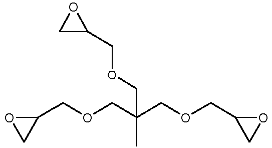 | | EEW = 118-128 |
| Resorcinol diglycidyl ether (RDGE) | Comparative aromatic diglycidyl ether | 100% solids |
| 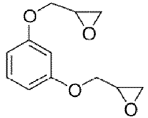 | | |
| Trimethylolpropane triglycidylether (TMPTGE) | Comparative aliphatic triglycidyl ether (Epodil 762 from Evonik) | 100% solids |
| | | EEW = 135-147 |
| 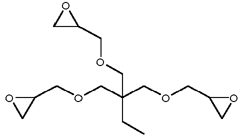 | | |
| Glycerol triglycidylether (GTGE) | Comparative triglycidyl ether ( Epodil 733 from Evonik) | 100% solids |
| 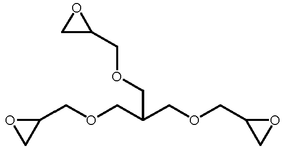 | | EEW= 150-160 |
| Cyclohexane dimethanol diglycidyl ether (CDMDGE) | Comparative diglycidyl ether (Epodil 757 from Evonik) | 100% solids |
| 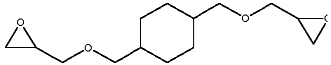 | | EEW = 85 |
| Amide wax | Thixotropic agent,thickener (Crayvallac Ultra from Aricema | 100% solids |
| 3-glycidoxy- propyl- trimethoxysilane | Adhesion promotor | |
| Cycloaliphatic amine | Curing agent; amine-epoxy Sn2-reaction, (Ancamine 2167 from Evonik) | AHEW = 53 |
| 2-ethyl-4-methyl-imidazole | Homopolymerisation accelerator; (Imicure EMI-24 from Evonik) | |
| 1-methylimidazole | Homopolymerisation accelerator; (1-methyl imidazole from Sigma Aldrich) | |
| 2,4,6-tris- dimethylamine- phenol | Homopolymerisation accelerator (Ancamine K54 from Evonik) | |
| Titanium dioxide | Pigment | |
| Carbon black | Pigment | |
| Aluminum oxide | Filler | |
| Barium sulphate | Filler | |
| Feldspar | Filler | |

### Preparation of coating compositions comprising the binder system of the invention

The components of the coating compositions were mixed in the proportions set out in the Table below. The components of the compositions are given in the tables as wt%.

All parts of Component A were mixed in a dissolver. Component B was mixed by mechanical agitation (stirring) of the liquid only components.

### Preparation of samples for testing

- For Tg measurements by DMA:
   The test samples were prepared by mixing component A and B and applying the mixture on Mylar^{®} polyester sheets for easy removal of free coating films. The thickness (dry film) of the coating was in the range 200-400 µm. The coatings were cured for 7 days at 21 °C and for 1 day at 80 °C. After the coating was cured, it was cut into strips of appropriate size (rectangular strips, 60 mm x 5 mm) for use with a tension-film clamp on a TA Q800 DMA instrument. The method details are described below. The peak of the tan delta curve was taken as the Tg value.
- For absorption testing: Component A and B were mixed and applied on Mylar^{®} polyester sheets for easy removal of free coating films. The thickness (dry film) of the coating was in the range 200-400 µm. The coatings were cured for 7 days at 21 °C for 7 days and for 1 day at 80 °C. After the coating was cured it was cut into squares of appropriate size (approximately 2 cm x 2 cm)

### Test Methods

- Tg was determined by Dynamic Mechanical Analysis (DMA) using the following parameters:
   ∘ Instrument DMA Q800 V21.3 Build 96
   ∘ Module DMA Multi-Frequency - Strain
   ∘ Clamp Tension: Film
   ∘ Geometry Rectangular (Length, Width, Thickness)
   ∘ StaticForce 0.0100 N
   ∘ Method:
      ▪ Equilibrate at -20.00 °C
      ▪ Isothermal for 3.00 min
      ▪ Ramp 4.00 °C/min to 250.00 °C
      ▪ Equilibrate at 30.00 °C

The peak of the tan delta curve was taken as the Tg value.
- Xylene absorption was tested by immersing the samples in xylene for 1 day. The samples we taken out and weighed immediately. The xylene absorption is given in wt.% and measured as the difference in weight of the sample before and after immersion in xylene.
- 1,2-dichloroethane absorption was tested by immersing the samples in 1,2-dichloroethane for 1 day. The samples we taken out and weighed immediately. The 1,2-dichloroethane absorption is given in wt.% and measured as the difference in weight of the sample before and after immersion in 1,2-dichloroethane.

The results of testing are also set out in the tables below wherein CE means comparative example. The comparative examples 1-3 comprise different di- and triglycidylethers. Comparative example 4 is a commercially available product, which comprises resorcinol diglycidylether. Comparative example 5 lacks any low molecular weight epoxy compound.

| Component | Ex.1 | Ex. 2 | CE1 | CE2 | CE3 |
|---|---|---|---|---|---|
| **Component A** | | | | | |
| **Binder system** | | | | | |
| Novolac epoxy | 8 | 8 | 8 | 8 | 8 |
| Resorcinol diglycidylether | - | - | - | - | - |
| Trimethylolethane triglycidylether (TMETGE) | 37.5 | 37.5 | - | - | - |
| Glycerol tri- glycidylether (GTGE) | - | - | 37.5 | - | - |
| Trimethylolpro-panetriglycidylether (TMPTGE) | - | - | - | 37.5 | - |
| Cyclohexane dimethanol diglycidyl ether | - | - | - | - | 37.5 |
| 3-glycidoxy-propyltrimethoxysilane | 1 | 1 | 1 | 1 | 1 |

| **Fillers** | | | | | |
|---|---|---|---|---|---|
| Titanium dioxide | 3.7 | 3.7 | 3.7 | 3.7 | 3.7 |
| Carbon black | 0.1 | 0.1 | 0.1 | 0.1 | 0.1 |
| Aluminum oxide | 6.7 | 6.7 | 6.7 | 6.7 | 6.7 |
| Barium sulphate | 25 | 25 | 25 | 25 | 25 |
| Feldspar | 15 | 15 | 15 | 15 | 15 |

| **Solvent** | | | | | |
|---|---|---|---|---|---|
| Xylene | 2 | 2 | 2 | 2 | 2 |

| **Additives** | | | | | |
|---|---|---|---|---|---|
| Thixotropic agent (amide wax) | 1 | 1 | 1 | 1 | 1 |
| | | | | | |
| | | | | | |
| | 100 | 100 | 100 | 100 | 100 |

| **Component B** | | | | | |
|---|---|---|---|---|---|
| **Curing agent** | | | | | |
| Cycloaliphatic amine | 76 | 76 | 76 | 76 | 76 |

| **Accelerators** | | | | | |
|---|---|---|---|---|---|
| 1-methylimidazole | 12 | - | - | - | - |
| 2-ethyl-4-methylimidazole | 4 | 16 | 16 | 16 | 16 |
| 2,4,6-tris- dimethylamine-phenol | 8 | 8 | 8 | 8 | 8 |
| | 100 | 100 | 100 | 100 | 100 |
| | | | | | |

| **Composition (A+B)** | | | | | |
|---|---|---|---|---|---|
| Novolac epoxy | 7.28 | 7.28 | 7.28 | 7.28 | 7.28 |
| Glycidyl ether | 34.1 | 34.1 | 34.1 | 34.1 | 34.1 |
| Titanium dioxide | 3.4 | 3.4 | 3.4 | 3.4 | 3.4 |
| Carbon black | 0.09 | 0.09 | 0.09 | 0.09 | 0.09 |
| Aluminum oxide | 609 | 609 | 609 | 609 | 6.09 |
| Barium sulphate | 22.67 | 22.67 | 22.67 | 22.67 | 22.67 |
| Feldspar | 13.64 | 13.64 | 13.64 | 13.64 | 13.64 |
| Xylene (solvent) | 1.82 | 1.82 | 1.82 | 1.82 | 1.82 |
| Thixotropic agent (amide wax) | 0.91 | 0.91 | 0.91 | 0.91 | 0.91 |
| 3-glycidoxy-propyltrimethoxysilane | 0.91 | 0.91 | 0.91 | 0.91 | 0.91 |
| Cycloaliphatic amine | 6.91 | 6.91 | 6.91 | 6.91 | 6.91 |
| 1-methylimidazole | 109 | 0 | 0 | 0 | 0 |
| 2-ethyl-4-methylimidazole | 0.36 | 1.45 | 1.45 | 1.45 | 1.45 |
| 2,4,6-tris- dimethylamine-phenol | 0.73 | 0.73 | 0.73 | 0.73 | 0.73 |
| | 100 | 100 | 100 | 100 | 100 |
| | | | | | |
| Epoxy equivalent weight (EEW) of comp.A | 283 | 283 | 344 | 318 | 364 |
| Amine hydrogen equivalent weight of comp. B | 70 | 70 | 70 | 70 | 70 |
| | | | | | |
| Mixing ratio by weight (comp A: comp B) | 100:10 | 100:10 | 100:10 | 100:10 | 100:10 |
| Wt% ratio of TMETGE to Novolac epoxy | 4.6:1 | 4.6:1 | 0 | 0 | 0 |
| Wt% TMETGE in the epoxy-resin mixture | 82.4 | 82.4 | 0 | 0 | 0 |
| Wt% TMETGE in the binder system | 67.4 | 67.4 | 0 | 0 | 0 |
| Wt% TMETGE in the composition | 34.1 | 34.1 | 0 | 0 | 0 |

| **Test results** | Ex. 1 | Ex. 2 | CE1 | CE2 | CE3 | CE4 | CE5 |
|---|---|---|---|---|---|---|---|
| Tg by DMA (after 7 days 21 °C + 1 day 80 °C) [°C] | 155 | 164 | 107 | 91 | 124 | 138 | 117 |
| Xylene absorption after 1 day immersion [wt%] (curing conditions: 7 days 21 °C + 1 day 80 °C) | 0.2 | 0.1 | 0.2 | 0.3 | NT | 0.02 | 1.9 |
| | | | | | (cures too slowly) | | |
| EDC absorption after 1 day immersion [wt%] (curing conditions: 7 days 21 °C + 1 day 80 °C) [wt%] | 0.4 | 0.4 | 23 | 25 | NT (cures too slowly) | 0 | 16.6 |

| | | | | | | | |
|---|---|---|---|---|---|---|---|
| ¹CE4: Commercially available tank coating based on resorcinol diglycidyl ether (RDGE) and an epoxy-based binder (Interline 9001) ²CE5: Commercially available tank coating based on a Novolac epoxy-based binder without any low molecular weight di or triglycidyl ethers. | | | | | | | |

The results show that the coatings comprising the binder system of the invention (Ex. 1 and 2) have a significantly higher Tg (155 and 164 °C) compared to the comparative examples comprising different di- and tri-glycidyl ethers (CE1 - CE3, Tgs 91-124 °C). The Tg of the coating comprising the binder system of the invention is also significantly higher than that of the commercially available reference tank coatings (CE4 and CE5).

The results also show that it is the combination of an epoxy-based binder and TMETGE that yields a coating with a high Tg, and therefore a high density. Comparative example 5, which lacks any low molecular weight diglycidyl ether compound, has a much lower Tg of 117 °C.

The absorption test results corroborate the results obtained in the DMA testing. The examples of the invention absorb much less xylene and EDC compared to the comparative examples comprising different di-and tri-glycidyl ethers (CE1-CE3) and the coating in CE5 which does not comprise any low molecular weight di or triglycidyl ethers. This is particularly noticeable in the EDC testing.

The coating in CE4 is based on the combination of resorcinol diglycidyl ether (RDGE) and an epoxy-based binder. This coating absorbs slightly less of the xylene and EDC than the examples of the invention but the coatings of the invention would have a significantly improved health and safety profile since it does not comprise RDGE which is classified as suspected of causing cancer and genetic defects. The coatings of the invention thereby presents a safer method of obtaining a coating with a high crosslinking density and low chemical absorption than what is known in the art.

## Claims

1. A binder system comprising:
(i) an epoxy-based binder;
(ii) trimethylolethane triglycidyl ether;
(iii) a curing agent; and
(iv) a homopolymerisation accelerator,
wherein the wt% of trimethylolethane triglycidyl ether, based on the total dry weight of binder system, is higher than the wt% of epoxy-based binder, based on the total dry weight of the binder system.

2. A binder system as claimed in claim 1, wherein said trimethylolethane triglycidyl ether is present in an amount of 50-90 wt%, based on the total dry weight of (i) an epoxy-based binder and (ii) trimethylolethane triglycidyl ether.

3. A binder system as claimed in claim 1 or 2, wherein the weight ratio of trimethylolethane triglycidyl ether to epoxy-binder system is 1:1 to 100:1.

4. A binder system as claimed in any one of claims 1 to 3, wherein said curing agent comprises at least one amine group, preferably a cycloaliphatic amine or polyamine.

5. A binder system as claimed in any one of claims 1 to 4, wherein said homopolymerisation accelerator is an imidazole.

6. A coating composition comprising the binder system as defined in any one of claims 1 to 5.

7. A method for preparing a binder system as claimed in any one of claims 1 to 5, or a coating composition as claimed in claim 6 comprising mixing:
(i) an epoxy-based binder;
(ii) trimethylolethane triglycidyl ether;
(iii) a curing agent; and
(iv) an homopolymerisation accelerator.

8. A kit for preparing a binder system as claimed in any one of claims 1 to 5, or a coating composition as claimed in claim 6, comprising:
(a) a first container containing an epoxy-based binder and trimethylolethane triglycidyl ether; and
(b) a second container containing a curing agent and an homopolymerisation accelerator.

9. A container containing a binder system as claimed in any one of claims 1 to 5 or a coating composition as claimed in claim 6.

10. A method of providing a coating on a surface, preferably a metal surface, wherein said method comprises:
(i) applying a composition as claimed in claim 6; and
(ii) curing said composition to form a coating on the surface.

11. A coating obtainable by the method of claim 10.

12. A coating comprising a binder system as claimed in any one of claims 1 to 5 or a coating composition as claimed in claim 6.

13. Use of a composition as claimed in claim 6, to form a coating on at least one surface of a substrate or article, preferably a tank.

14. Use of a binder system as claimed in any one of claims 1 to 5, to form a coating composition.

15. Use of trimethylolethane triglycidyl ether to form a binder system as claimed in any one of claims 1 to 5.

## Patentansprüche

1. Bindemittelsystem, umfassend:
(i) ein Bindemittel auf Epoxidbasis,
(ii) Trimethylolethantriglycidylether;
(iii) ein Härtungsmittel; und
(iv) einen Homopolymerisationsbeschleuniger,
wobei die Gew.-% an Trimethylolethantriglycidylether, bezogen auf das Gesamttrockengewicht des Bindemittelsystems, höher sind als die Gew.-% an Bindemittel auf Epoxidbasis, bezogen auf das Gesamttrockengewicht des Bindemittelsystems.

2. Bindemittelsystem nach Anspruch 1, wobei der Trimethylolethantriglycidylether in einer Menge von 50 bis 90 Gew.-%, bezogen auf das Gesamttrockengewicht von (i) einem Bindemittel auf Epoxidbasis und (ii) Trimethylolethantriglycidylether, vorhanden ist.

3. Bindemittelsystem nach Anspruch 1 oder 2, wobei das Gewichtsverhältnis von Trimethylolethantriglycidylether zu Epoxid-Bindemittelsystem 1:1 bis 100:1 ist.

4. Bindemittelsystem nach einem der Ansprüche 1 bis 3, wobei das Härtungsmittel mindestens eine Aminogruppe, vorzugsweise ein cycloaliphatisches Amin oder Polyamin, umfasst.

5. Bindemittelsystem nach einem der Ansprüche 1 bis 4, wobei der Homopolymerisationsbeschleuniger ein Imidazol ist.

6. Beschichtungszusammensetzung, umfassend das in einem der Ansprüche 1 bis 5 definierte Bindemittelsystem.

7. Verfahren zur Herstellung eines Bindemittelsystems nach einem der Ansprüche 1 bis 5 oder einer Beschichtungszusammensetzung nach Anspruch 6, umfassend das Vermischen:
(i) eines Bindemittels auf Epoxidbasis;
(ii) Trimethylolethantriglycidylether;
(iii) eines Härtungsmittels und
(iv) eines Homopolymerisationsbeschleunigers.

8. Kit zur Herstellung eines Bindemittelsystems nach einem der Ansprüche 1 bis 5, oder einer Beschichtungszusammensetzung nach Anspruch 6, umfassend:
(a) einen ersten Behälter, der ein Bindemittel auf Epoxidbasis und Trimethylolethantriglycidylether enthält; und
(b) einen zweiten Behälter, der ein Härtungsmittel und einen Homopolymerisationsbeschleuniger enthält.

9. Behälter, enthaltend ein Bindemittelsystem nach einem der Ansprüche 1 bis 5 oder eine Beschichtungszusammensetzung nach Anspruch 6.

10. Verfahren zum Aufbringen einer Beschichtung auf eine Oberfläche, vorzugsweise eine Metalloberfläche, wobei das Verfahren umfasst:
(i) Auftragen einer Zusammensetzung nach Anspruch 6; und
(ii) Aushärten der Zusammensetzung zur Bildung einer Beschichtung auf der Oberfläche.

11. Beschichtung, erhältlich durch das Verfahren nach Anspruch 10.

12. Beschichtung, umfassend ein Bindemittelsystem nach einem der Ansprüche 1 bis 5 oder eine Beschichtungszusammensetzung nach Anspruch 6.

13. Verwendung einer Zusammensetzung nach Anspruch 6 zur Bildung einer Beschichtung auf mindestens einer Oberfläche eines Substrats oder Gegenstands, vorzugsweise eines Tanks.

14. Verwendung eines Bindemittelsystems nach einem der Ansprüche 1 bis 5 zur Bildung einer Beschichtungszusammensetzung.

15. Verwendung von Trimethylolethantriglycidylether zur Bildung eines Bindemittelsystems nach einem der Ansprüche 1 bis 5.

## Revendications

1. Système de liant comprenant :
(i) un liant à base d'époxy,
(ii) de l'éther triglycidylique de triméthyloléthane,
(iii) un agent durcissant, et
(iv) un accélérateur d'homopolymérisation ;
le pourcentage en poids de l'éther triglycidylique de triméthyloléthane rapporté au poids sec total du système de liant étant supérieur au pourcentage en poids du liant à base d'époxy rapporté au poids sec total du système de liant.

2. Système de liant selon la revendication 1, dans lequel ledit éther triglycidylique de triméthyloléthane est présent en une quantité de 50 à 90 % en poids, rapporté au poids sec total de (i) un liant à base d'époxy et (ii) de l'éther triglycidylique de triméthyloléthane.

3. Système de liant selon les revendications 1 ou 2, dans lequel le rapport pondéral entre l'éther triglycidylique de triméthyloléthane et le liant à base d'époxy est de 1:1 à 100:1.

4. Système de liant selon l'une quelconque des revendications 1 à 3, dans lequel ledit agent durcissant comprend au moins un groupe amine, de préférence une amine ou polyamine cycloaliphatique.

5. Système de liant selon l'une quelconque des revendications 1 à 4, dans lequel ledit accélérateur d'homopolymérisation est un imidazole.

6. Composition de revêtement comprenant le système de liant défini dans l'une quelconque des revendications 1 à 5.

7. Procédé de préparation d'un système de liant selon l'une quelconque des revendications 1 à 5, ou d'une composition de revêtement selon la revendication 6, comprenant le mélange de :
(i) un liant à base d'époxy,
(ii) de l'éther triglycidylique de triméthyloléthane,
(iii) un agent durcissant, et
(iv) un accélérateur d'homopolymérisation.

8. Kit de préparation d'un système de liant selon l'une quelconque des revendications 1 à 5, ou d'une composition de revêtement selon la revendication 6, comprenant :
(a) un premier conteneur contenant un liant à base d'époxy et de l'éther triglycidylique de triméthyloléthane, et
(b) un deuxième conteneur contenant un agent durcissant et un accélérateur d'homopolymérisation.

9. Conteneur contenant un système de liant selon l'une quelconque des revendications 1 à 5 ou une composition de revêtement selon la revendication 6.

10. Procédé de réalisation d'un revêtement sur une surface, de préférence une surface métallique, ledit procédé comprenant :
(i) l'application d'une composition selon la revendication 6, et
(ii) le durcissement de ladite composition pour former un revêtement sur la surface.

11. Revêtement susceptible d'être obtenu par le procédé selon la revendication 10.

12. Revêtement comprenant un système de liant selon l'une quelconque des revendications 1 à 5 ou une composition de revêtement selon la revendication 6.

13. Utilisation d'une composition selon la revendication 6, pour former un revêtement sur au moins une surface d'un substrat ou d'un article, de préférence une cuve.

14. Utilisation d'un système de liant selon l'une quelconque des revendications 1 à 5, pour former une composition de revêtement.

15. Utilisation d'éther triglycidylique de triméthyloléthane pour former un système de liant selon l'une quelconque des revendications 1 à 5.
